# EUROPÄISCHE PATENTANMELDUNG

(11) **EP 0 601 498 A2**
(43) Veröffentlichungstag der Anmeldung: **15.06.1994**
(21) Anmeldenummer: 93119540.8
(22) Anmeldetag: 03.12.1993
(51) Int. Cl.: H04L 5/22

(54) **Verfahren zur Übertragung von plesiochronen Signalen in einem synchronen Datennetz**

(30) Priorität: 10.12.1992 DE 4241691
(71) Anmelder: SIEMENS AKTIENGESELLSCHAFT, D-80333 München (DE)
(72) Erfinder: Schweiger, Ludwig, Dipl.-Ing. (FH), D-82515 Wolfratshausen (DE)

(57) **Zusammenfassung**

Bei dem Verfahren zum Übertragen von plesiochronen Signalen wird ein Pulsüberrahmen (MF) von mit 16 Basisblöcken (BB1... BB16) verwendet. Jeder Basisblock (BB) enthält 32 Datenblöcke DB1 bis DB32 mit einer Nutzdatenkapazität (PL) von 33 Bytes. Das plesiochrone Datensignal wird in 32 Bytes umfassende Zeitschlitze (PL) eingefügt. Das 33 Byte dient als Stopfzusatzbyte (SIB). Vier aufeinanderfolgende Pulsrahmenblöcke (FB1 ... FB4) - die der Payload von 33 Bytes entsprechen - werden zu einem Übertragungspulsrahmen (TF) zusammengefaßt. Je Übertragungspulsrahmen (TF) werden drei Stopfinformationsbytes (SIB1, SIB2, SIB3) und ein Stopfbyte (SOB) übertragen. Die Stopfinformationsbytes (SIB) enthalten Angaben, ob positiv oder negativ gestopft werden soll und wieviel Bits jeweils zum Stopfen verwendet werden. Bei negativen Stopfvorgängen werden die zusätzlich als Stopfbits zu übertragenden Datenbits im Stopfbyte (SOB) übertragen.

Das Verfahren gestattet die Übertragung von PCM 30-Signalen oder anderen Datensignalen, die ebenfalls eine Datenrate von 2,048 Mbit/s aufweisen.

## Beschreibung

Die Erfindung betrifft ein Verfahren zum Übertragen von plesiochronen Daten nach dem Oberbegriff des Patentanspruchs 1.

Um plesiochrone Datensignale über ein synchrones Netz übertragen zu können, ist eine Anpassung der Datenraten durch Stopfen erforderlich. In der internationalen Anmeldung WO 92/01341 ist ein optisches Datennetz hoher Betriebssicherheit beschrieben. Zwischen einer Zentraleinheit, jetzt als "Optical Line Termination" bezeichnet, und mehreren Anschlußeinheiten "Distant Units", jetzt als "Optical Network Units" beschrieben, werden im Zeitmultiplexverfahren Daten übertragen. Das konzipierte Verfahren eignet sich zwar gut zur Übertragung von Telefongesprächen, jedoch war es bisher nicht möglich, ein komplettes PCM 30-Signal zwischen einer Zentraleinheit und einer Anschlußeinheit DU zu übertragen. Dies ist jedoch für einige Dienste erforderlich. Der PCM30-Pulsrahmen kann zur Übertragung von plesiochronen Signalen (P2) und natürlich auch von synchronen Signalen mit einer Datenrate von 2,048 Mbit/s verwendet werden.

Aufgabe der Erfindung ist es, ein Verfahren zum Übertragen von plesiochronen Daten mit einer Datenrate von 2,048 Mbit/s anzugeben.

Die Aufgabe wird durch das im Patentanspruch angegebene Verfahren gelöst.

Vorteilhafte Anwendungen der Erfindung sind in den Unteransprüchen angegeben.

Der besondere Vorteil des Verfahrens liegt in der Übertragungsmöglichkeit für Daten, die in einem PCM 30-Pulsrahmen eingefügt sind, und für Datensignale mit der entsprechenden Datenrate.

Besonders vorteilhaft ist das angewendete Stopfverfahren. Es gestattet Stopfvorgänge, die ein Bit, mehrere Bits und sogar ein Byte umfassen. So entsteht nur der minimale nicht vermeidbare Jitter.

Besonders vorteilhaft ist die Verwendung eines Überrahmens, der mehrere Basisblöcke mit jeweils mehreren Datenblöcken umfaßt. Jedem gleich angeordneten Datenblock ist jeweils ein Pulsrahmenblock zugeordnet. In diesen wird jeweils ein 2,048 Mbit/s-Signal übertragen.

Die Stopfinformation wird in jedem Übertragungspulsrahmen mehrfach übertragen. Hierdurch sind Mehrheitsentscheidungen bei den übertragenen Stopfinformationsbits möglich. In entsprechende Zeitschlitz können dann in jedem vierten Pulsrahmen Stopfbits übertragen werden.

Ein Ausführungsbeispiel der Erfindung wird anhand von Figuren näher erläutert.

Es zeigen:
- Fig. 1: einen zur Übertragung verwendeten Pulsrahmen,
- Fig. 2: ein optisches Datennetz,
- Fig. 3: ein Zeitdiagramm mit der Bitbelegung der Stopfzusatzbytes und
- Fig. 4: ein Zeitdiagramm der letzten Bytes eines Überrahmens.

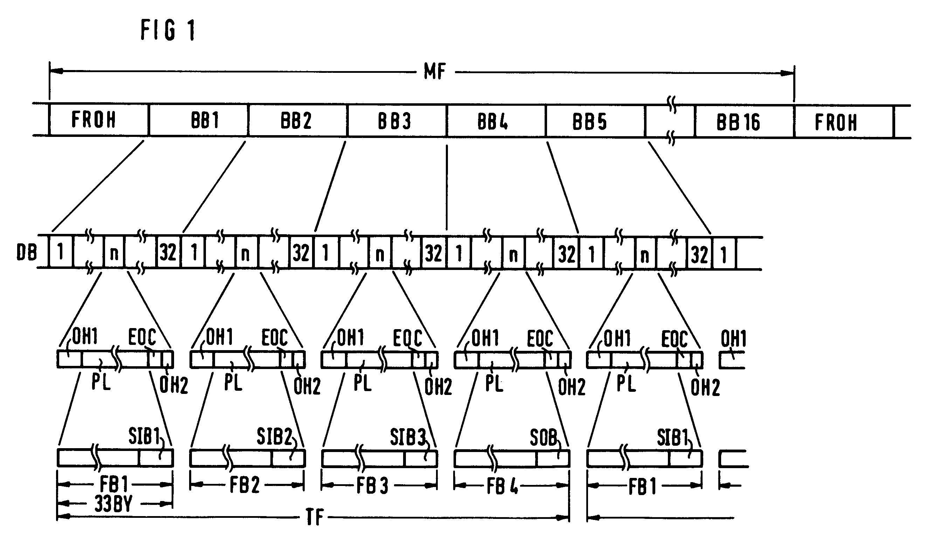

Fig. 1 zeigt im oberen Teil einen Pulsüberrahmen MF, der aus dem Rahmenkennungsteil (Frame Overhead) FROH und 16 Basisblöcken BB1 bis BB16 mit jeweils 512 Bytes besteht.

Dieser Pulsüberrahmen wird zur Übertragung von Daten zwischen einer Zentraleinheit OLT und den Anschlußeinheiten ONUs verwendet. Die zur Übertragung der Nutzdaten PL (Payload) verwendeten Zeitschlitze sind für beide Richtungen gleich. Jeder Basisblock BB1 bis BB16 enthält wieder 32 Datenblöcke DB1 bis DB32, von denen jeder eine Nutzdatenkapazität (Payload) von 33 Bytes sowie zusätzlich einen Kennungsteil (Overhead) OH11, OH12, .... und einen Betriebskanal EOC aufweist.

In vier gleichpsitionierten Datenblöcke DBn (n = 1.. 32) von jeweils vier aufeinanderfolgenden Basisblöcken BB1 bis BB4; BB5 bis BB8; ..... wird jeweils einer von insgesamt vier Rahmenblöcken FB1 bis FB4 eines Übertragungspulsrahmens TF übertragen, d.h. ein PCM 30-Signal wird jeweils in dieselben Datenblöcke, z.B. "n" der 16 Basisblöcke BB1 bis BB16 eingefügt. Der dargestellte Übertragungspulsrahmen TF wiederholt sich viermal innerhalb eines Pulsüberrahmens MF.

Die zur Steuerung des Übertragungsverfahrens benötigten Daten sollen hier außer Acht gelassen werden. Zur Übertragung des PCM 30-Signals oder eines entsprechenden Datensignals sind 32 Datenwörter (Bytes) erforderlich. Ein 33. Byte, das Stopfzusatzbyte SIB, SOB, ist zur Übertragung der notwendigen Stopfinformation bzw. zur Übertragung eines Stopfbytes vorgesehen.

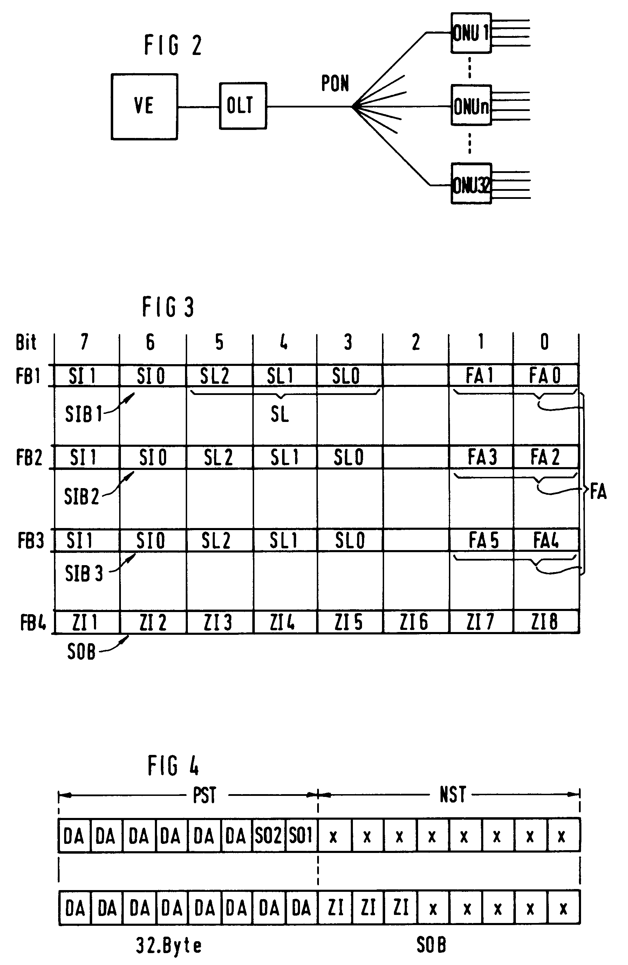

Ein in Figur 2 dargestellte Prinzipschaltbild zeigt ein optisches Übertragungsnetz. Es besteht aus einer Vermittlungseinheit VE, einer Zentraleinheit OLT und mehreren (hier 32) Anschlußeinheiten ONU, an die jeweils mehrere Teilnehmer angeschaltet sind.

Jeder Anschlußeinheit ist ein Datenblock DB1 .. DBn... DB32 zugeordnet. Die Anpassung der Datenraten der entsprechenden Signale erfolgt durch Stopfen.

Im Stopfbyte können bis zu acht Datenbits als Negativ-Stopf-Bits übertragen werden.

In die "Datenzeitschlitze" der Payload PL von gleich angeordneten Datenblöcken, z.B. DBn,werden bei übereinstimmenden Transferdatenraten jeweils die Daten eines PCM-Pulsrahmen oder eines entsprechendes Datensignals eingeschrieben. Als Stopfzusatzbytes werden entsprechend Figur 3 in den ersten drei Pulsrahmen FB1 bis FB3 die Stopfinformationsbytes SIB1, SIB2 und SIB3 übertragen. Im vierten Pulsrahmen folgt das Stopfbyte SOB. Im Stopfbyte können bis zu acht Datenbits als Negativ-Stopf-Bits übertragen werden. Jedes Stopfinformationsbyte SIB enthält zwei Bits Stopfinformation SI und drei Bits Stopflängeninformation SL. Außerdem sind jeweils zwei Bits FA1, FA2; FA3, FA4; FA5, FA6 für die Übertragungspulsrahmenkennung FA vorgesehen. Der erste Pulsrahmen FB1 kann also einem beliebigen Basisblock, z.B. 1 bis 4 zugeordnet sein. Ebenso ist auch eine feste Zuordnung der Pulsrahmen FB1 bis FB4 zu den Basisblöcken möglich. Der Zeitschlitz für ein weiteres Bit, das Bit 2, kann unbelegt bleiben, oder zur Übertragung von Zusatzinformation dienen. Die Anordnung der Bits im Stopfzusatzbyte ist willkürlich wählbar.

Tabelle 1 ist die Bedeutung der Stopfinformationsbits SI zu entnehmen und der Tabelle 2 die Bedeutung der Stopflängenbits.

**Tabelle 1**

| Stopfinformation Wahrheitstabelle: | | |
|---|---|---|
| SI1 | SI0 | Stopfvorgang |
| 0 | 0 | keiner |
| 0 | 1 | negativ |
| 1 | 0 | positiv |
| 1 | 1 | keiner |

**Tabelle 2**

| Stopfinformationslängencode: | | | | | |
|---|---|---|---|---|---|
| Stopfvorgang | SL2 | SL1 | SL0 | Anzahl Datenbits ZI im SOB | Anzahl Datenbits im 32.Byte |
| keiner | X | X | X | 0 | 8 |
| NST | 0 | 0 | 0 | 1 | 8 |
| NST | 0 | 0 | 1 | 2 | 8 |
| NST | 0 | 1 | 0 | 3 | 8 |
| NST | 0 | 1 | 1 | 4 | 8 |
| NST | 1 | 0 | 0 | 5 | 8 |
| NST | 1 | 0 | 1 | 6 | 8 |
| NST | 1 | 1 | 0 | 7 | 8 |
| NST | 1 | 1 | 1 | 8 | 8 |
| PST | 0 | 0 | 0 | 0 | 7 |
| PST | 0 | 0 | 1 | 0 | 6 |
| PST | 0 | 1 | 0 | 0 | 5 |
| PST | 0 | 1 | 1 | 0 | 4 |
| PST | 1 | 0 | 0 | 0 | 3 |
| PST | 1 | 0 | 1 | 0 | 2 |
| PST | 1 | 1 | 0 | 0 | 1 |
| PST | 1 | 1 | 1 | 0 | 0 |

Negativ Stopfen bedeutet zusätzliche Datenbits Z/1 bis Z/8 im Stopfbyte SOB zu übertragen. Positiv Stopfen bedeutet weniger Datenbits DA im letzten, dem 32-Datenbyte des Rahmenblocks FB4 zu übertragen.

In Fig. 3 sind vier aufeinanderfolgenden Pulsrahmenblöcke FB1 bis FB4 dargestellt. Die Stopfinformationsbits SI und die Stopflängeninformationsbits SL werden dreifach übertragen, und empfangsseitig wird ein Mehrheitsentscheid durchgeführt. Als Überrahmenkennung wird hier die Folge 11 11 00 übertragen, so daß der Überrahmenbeginn eindeutig festgelegt werden kann. Andere Kombinationen sind ebenso möglich.

In Figur 4 ist der zum Positiv-Stopfen PST und Negativ-Stopfen NST verwendete Bereich eines Pulsrahmens nochmals als Zeitdiagramm dargestellt. Es wird folglich höchstens in jedem vierten Pulsrahmen positiv oder negativ gestopft, wobei ein bis acht Bits zum Stopfen verwendet werden können. Im oberen Diagramm sind beispielsweise die Stopfbits SO1, SO2 im 32.Byte Leerbits, d.h. sie enthalten keine relevante Information. Im 33. Byte SOB können dagegen zusätzliche Datenbits ZI beim Negativstopfen (unteres Diagramm) übertragen werden.

Statt wie Figur 3 angegeben, können die Stopfbits auch mit der niederwertigsten Stelle des Stopfbytes SOB beginnend übertragen werden. In den höherwertigen Stellen kann dann beispielsweise die Stopfinformation und die Stopflängeninformation der vorangegangenen Stopfinformationsbytes wiederholt werden.

## Patentansprüche

1. Verfahren zum Übertragen von plesiochronen Signalen über ein synchrones Datennetz,
**dadurch gekennzeichnet**,
daß ein Pulsrahmenblock (FB1, ...) mit einer Nutzdatenübertragungskapazität (PL) von 33 Bytes verwendet wird, daß jeweils vier Pulsrahmenblöcke (FB1 bis FB4) einen Übertragungsrahmen (TF) bilden, daß das plesiochrone Datensignal in 32 Bytes der Nutzdatenkapazität (PL) eingefügt wird, daß als 33. Byte Stopfzusatzbytes (SIB, SOB) übertragen werden, die als Stopfinformationbytes (SIB1 bis SIB3) Stopfinformationsbits (SI1, SI0) und Stopflängeninformationsbits (SL2, SL1, SL0) enthalten oder als Stopfbyte (SOB) zusätzliche Informationsbits enthalten.

2. Verfahren nach Anspruch 1,
**dadurch gekennzeichnet**,
daß jeweils vier Pulsrahmenblöcke (FB1 bis FB4) einen Übertragungspulsrahmen (TF) bilden.

3. Verfahren nach Anspruch 1 oder 2,
**dadurch gekennzeichnet**,
daß zwei Stopfinformationsbits (SI1, SI0) und drei Stopflängeninformationsbits (SL2, SL1, SL0) übertragen werden.

4. Verfahren nach einem der vorhergehenden Ansprüche,
**dadurch gekennzeichnet**,
daß dieselben Stopfinformationsbits (SI1, SI0) und Stopflängeninformationsbits (SL2, SL1, SL3) in mehreren Stopfinformationsbytes (SIB) übertragen werden und daß empfangsseitig Mehrheitsentscheidungen für die übertragenen Stopfinformationsbits (SI1, SI0) und Stopflängeninformationsbits (SL2, SL1, SL0) durchgeführt werden.

5. Verfahren nach einem der vorhergehenden Ansprüche,
**dadurch gekennzeichnet**,
daß mit Stopfinformationsbytes (SIB1, SIB2, SIB3) eine Übertragungsrahmenkennung (FA) übertragen wird.

6. Verfahren nach einem der vorhergehenden Ansprüche,
**dadurch gekennzeichnet**,
daß die Pulsrahmen (FB1, FB2, FB3, FB4) fest den Basisblöcken (BB1, BB2, ...) eines Pulsüberrahmens (MF) zugeordnet werden.

7. Verfahren nach Anspruch 5 oder Anspruch 6,
**dadurch gekennzeichnet**,
daß ein Pulsrahmen (FB1, FB2, ...) jeweils in denselben Datenblock (DBn) eingefügt wird.

8. Verfahren nach Anspruch 7,
**dadurch gekennzeichnet**,
daß jeweils 32 Datenblocks (DB1...DB32) einen Basisblock (BB1 bis BB11) bilden
und daß 16 Basisblöcke (BB1...BB16) und ein Rahmenkennungsteil (FROH) einen Pulsüberrahmen (MF) bilden.
